Europäisches Patentamt

European Patent Office

Office européen des brevets

(19)

(11) Veröffentlichungsnummer: **0 393 351**

**A2**

(12) **EUROPÄISCHE PATENTANMELDUNG**

(21) Anmeldenummer: **90104870.2**

(22) Anmeldetag: **15.03.90**

(51) Int. Cl.5: **H04J 3/14, H04L 7/00, H04L 7/04**

(30) Priorität: **18.04.89 DE 3912660**

(43) Veröffentlichungstag der Anmeldung:
**24.10.90 Patentblatt 90/43**

(84) Benannte Vertragsstaaten:
**FR GB IT**

(71) Anmelder: **Wandel & Goltermann GmbH & Co**
**Postfach 45 Mühleweg 5**
**D-7412 Eningen u.A.(DE)**

(72) Erfinder: **Grupp, Wolfgang, Dr.-Ing.**
**Einsteinstrasse 48**
**D-7430 Metzingen(DE)**

(74) Vertreter: **Kucher, Hans, Dipl.-Ing.**
**Richard-Strauss-Weg 4**
**D-7410 Reutlingen(DE)**

(54) **Verfahren und Schaltungsanordnung zum Feststellen eines Zellverlustes und/oder einer Zelleinfügung beim Durchlaufen zellstrukturierter Signale durch eine zellorientierte Übertragungseinrichtung.**

(57)
1. Verfahren und Schaltungsanordnung zum Feststellen eines Zellverlustes und/oder einer Zelleinfügung beim Durchlaufen zellstrukturierter Signale durch eine zellorientierte Übertragungseinrichtung.

2.1 In Übertragungseinrichtungen für zellstrukturierte Signale können störende Zellverluste und/oder Zelleinfügungen auftreten, die zu Übertragungsfehlern führen. Mit dem Verfahren sollen Zellverluste und/oder Zelleinfügungen festgestellt werden können.

2.2 Beim Bitvergleich von Signalen, die an gegeneinander um eine Schieberegisterstufe vor- und zurückversetzten Schieberegisterabgriffen auftreten, ist an der ?(dauernden)? Bitübereinstimmung? erkennbar, daß ein Zellverlust bzw. eine Zelleinschiebung vorliegt.

2.3 Das Verfahren eignet sich zur Feststellung eines Zellverlustes bzw. einer Zelleinschiebung bei bei mit zellstrukturierten Signalen arbeitenden Übertragungseinrichtungen.

Fig.1

## Verfahren und Schaltungsanordnung Feststellen eines Zellverlustes und/oder einer Zelleinfügung beim Durchlaufen zellstrukturierter Signale durch eine zellorientierte Übertragungseinrichtung.

Die Erfindung betrifft ein Verfahren und eine Schaltungsanordnung zum Feststellen eines Zellverlustes und/oder einer Zelleinfügung beim Durchlaufen zellstrukturierter Signale durch eine zellorientierte Übertragungseinrichtung.

In mit zellstrukturierten Signalen arbeitenden Übertragungseinrichtungen, z.B. in (geplantenn) Breitband-ISDN-Systemen, können neben anderen Fehlern Zellverluste und Zelleinfügungen auftreten, die Übertragungsfehler zur Folge haben.

Zum Feststellen eines Zellverlustes und/oder einer Zelleinfügung ist es bekannt, im Informationsfeld aufeinanderfolgender Zellen aufeinanderfolgende Kennzahlen unterzubringen und empfangsseitig deren Aufeinanderfolge auf Lücken und Überlappungen zu prüfen.

Der Erfindung liegt die Aufgabe zugrunde, ein einfacheres Verfahren und eine Schaltungsanordnung zum Feststellen eines Zellverlustes und/oder einer Zelleinfügung bei mit zellstrukturierten Signalen arbeitenden Übertragungseinrichtungen anzugeben.

Diese Aufgabe wird hinsichtlich des Verfahrens durch die kennzeichnenden Merkmale des Anspruchs 1 und hinsichtlich der Schaltungsanordnung durch die kennzeichnenden Merkmale des Anspruchs 6 gelöst.

Es wird also die bei einer Zelleinfügung oder einem Zellverlust auftretende Verschiebung des Empfangsmusters gegenüber einem gleichen Referenzmuster durch Auswerten der Struktur des bei einem bitweisen Vergleich entstehenden Fehlermusters erkannt.

Eine weitere Ausbildung der Erfindung ergibt sich durch Anwenden der im Anspruch 2 gekennzeichneten Merkmale. Auf diese Weise kann auf die Entstehungsursache von Bündelfehlern geschlossen werden.

Die mit der Erfindung erzielbaren Vorteile bestehen insbesondere darin, daß in Betrieb befindliche Übertragungssysteme auf den Verlust und/oder das Einfügen von Zellen geprüft werden können.

Aus der DE-PS 23 59 716 sind zwar ein Verfahren zum Unterscheiden von Bündelfehlern vom Ausfall der Synchronisation zwischen Sender und Empfänger von Bitfehlermeßeinrichtungen sowie eine Schaltungsanordnung zur Durchführung dieses Verfahrens bekannt, bei dem zwischen zwei Pseudozufallssignalfolgen, die im Sender und im Empfänger einer Bitfehlermeßeinrichtung in jeweils einem rückgekoppelten Schieberegister erzeugt werden, ein bitweiser Vergleich der über die Meßstrecke übertragenen mit der empfangsseitig erzeugten Pseudozufallsfolge vorgenommen wird.

Dort wird aber die aus dem bitweisen Vergleich entstehende Fehlersignalfolge im Hinblick auf die Unterscheidung zwischen einem Synchronisationsausfall und Bündelfehlern ausgewertet.

Aus DE 33 42 638 AI ist zwar ein Verfahren zur betrieblichen Überwachung von digitalen LWL-Übertragungsstrecken bekannt, das aber auf die physikalische Ebene beschränkt ist. Eine Überwachung der Verbindung zwischen zwei Benutzerschnittstellen ist damit nicht möglich. Bei ihm wird das Format der Datenwörter durch Hinzufügen von Prüfbits verändert, so daß mit einer erhöhten Geschwindigkeit übertragen werden muß, und es wird nur die Bitfehlerrate gemessen. Die Feststellung von Zellverlusten oder Zelleinfügungen, wie sie in der Vermittlungsebene bei der Übertragung zellstrukturierter Signale durch eine zellorientierte Übertragungseinrichtung vorkommen, ist dort nicht vorgesehen und auch nicht angesprochen.

Ein Ausführungsbeispiel der Erfindung ist in der Zeichnung dargestellt und wird im folgenden näher beschrieben. Es zeigen

Figur 1 ein vereinfachtes Blockschaltbild der Anordnung zur Durchführung des Verfahrens,

Figur 2 ein Diagramm mit zwei in der Anordnung gemäß Figur 1 auftretenden, miteinander bitweise zu vergleichenden gleichen Bitfolgen

Figur 3 ein dem in Figur 2 dargestellten Diagrammen entsprechendes Diagramm bei Verlust einer Zelle.

Figur 4 ein dem in Figur 2 dargestellten Diagrammen entsprechendes Diagramm bei Einfügung einer Zelle.

Figur 5 ein die Funktion der Auswerteeinrichtung und des Referenzgenerators wiedergebendes Diagramm.

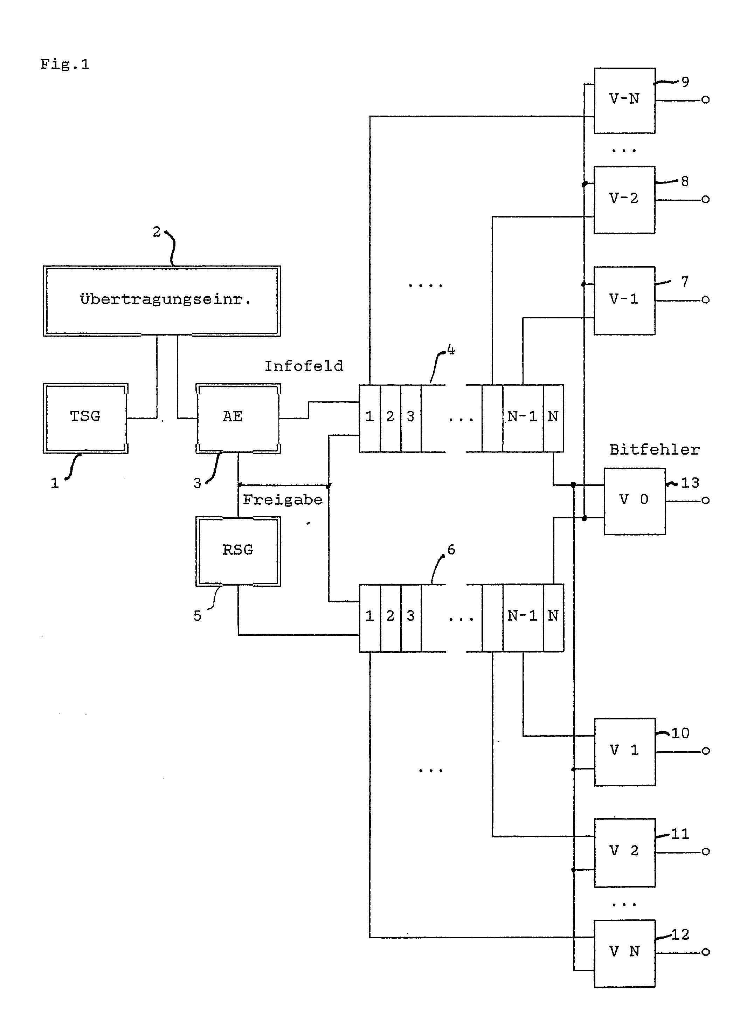

Bei der in Figur 1 dargestellten Anordnung erzeugt ein Testsignalsender 1 ein zellstrukturiertes Testsignal, das in einem logischen Testkanal der Übertragungseinrichtung 2 übertragen wird und dessen Zellen jeweils aus einem Kopffeld mit einer ersten Anzahl von Bits und einem Informationsfeld mit einer zweiten Anzahl von Bits bestehen, deren Längen der Norm der Übertragungseinrichtung entsprechen.

Eine Einrichtung 3 erkennt die am Ausgang der Übertragungseinrichtung 1 im logischen Testkanal übertragenen, das Testsignal enthaltenden Zellen, trennt ihre Kopffelder ab und liest ihre Informationsfelder in ein erstes Schieberegister 4 ein, in dem sie eine besondere Bitfolge bilden.

In einem Referenzsignalgenerator 5 wird eine periodische, der sendeseitigen Testsignalfolge entsprechenden Referenzsignalfolge erzeugt, die in ein zweites Schieberegister 6 eingelesen wird, dessen Länge derjenigen des ersten Schieberegister 4 entspricht. Die Einrichtung 3 erzeugt nur während der Dauer der Informatiomsfelder ein Freigabesignal für die beiden Schieberegister 4 und 6 und den Referenzsignalgenerator 5.

Erste Eingänge einer ersten Gruppe von Bitvergleichern 7, 8, und 9 sind mit einer letzten Stufe des zweiten Schieberegisters 6, und erste Eingänge einer zweiten Gruppe von Bitvergleichern 10, 11 und 12 sind mit einer letzten Stufe des ersten Schieberegisters 4 verbunden. Ein weiterer Bitvergleicher 13 ist mit zwei parallelen Stufen der beiden Schieberegister 4 und 6 verbunden und dient zur Erkennung von Bitfehlern, die nicht durch Zellverlust oder Zelleinfügung verursacht wurden.

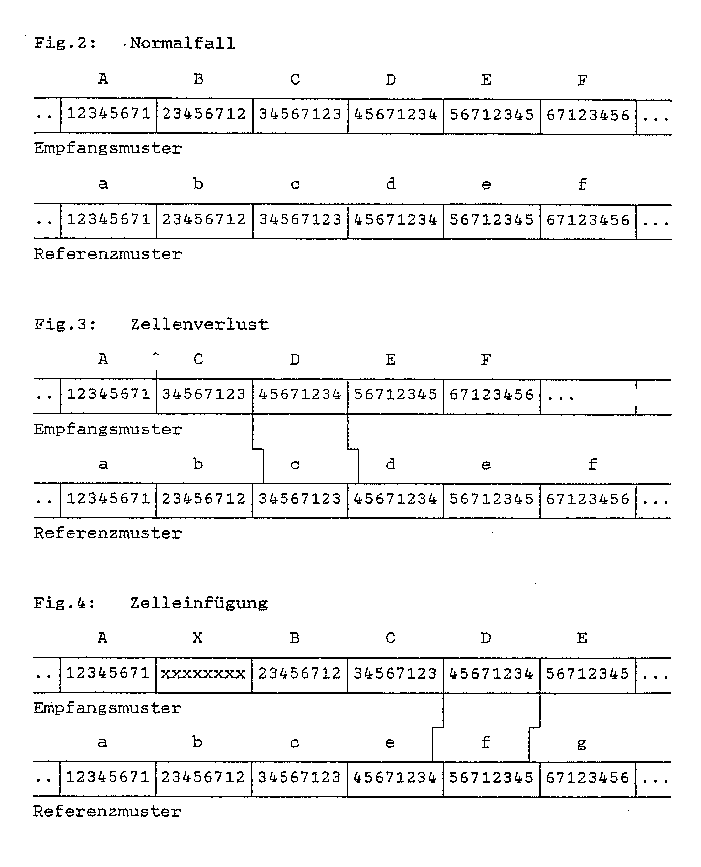

Bei den Diagrammen der Figuren 2, 3 und 4 ist vereinfachend angenommen, daß die Informationsfelder eine Länge von jeweils $2^N = 8$ Bit aufweisen ($N = 3$) und mit einer Testsignalfolge mit einer Periode von $2^N-1 = 7$ Bit gefüllt sind, wie sie beispielsweise in einem rückgekoppelten Schieberegister mit $N = 3$ Stufen erzeugt werden kann.

Das in Figur 2 oben dargestellte Diagramm zeigt unmittelbar aneinandergefügten Informationsfelder A bis F, die bei ungestörter Übertragungeinrichtung 2 mit einer durchgehenden periodischen Folge (Bit 1 bis Bit 7) von Testsignalbits gefüllt ist.

Darunter ist in Figur 2 ein Diagramm dargestellt, dessen zugeordnete Abschnitte zufolge der Freigabefunktion der Auswerteeinrichtung 3 in gleicher Weise mit der durchgehenden Referenzsignalfolge von Testbits (Bit Nr.1 bis Bit Nr.7) gefüllt ist.

In den beiden Schieberegistern 4 und 6 sind einander zugeordnete Ausschnitte aus den beiden Diagrammen der Figur 2 enthalten, deren Länge sich nach der Stufenzahl der beiden Schieberegister 4 bzw. 6 bemißt. Somit enthalten einander entsprechende Stufen der beiden Schieberegister 4 und 6 immer gleichartige Bit, so daß der Bitvergleicher 13 eine Anzeige "kein Bitfehler" abgibt.

Figur 3 zeigt ein dem in Figur 2 dargestellten Diagramm entsprechendes Diagramm mit aneinandergefügten Informationsfeldern aus den Zellen des empf REBF Testsignals bei Verlust des Informationsfeldes B. Dem Referenzsignalfeld b ist daher das Informationsfeld C aus dem empfangenen Testsignal zugeordnet, das gegenüber dem Referenzsignalfeld b um ein Bit voreilt. Daher erscheint nur am Ausgang des Bitvergleichers 7 ein konstantes Signal, das den Verlust einer Zelle anzeigt. An allen andern Bitvergleichern 8 bis 13 liegen jeweils um eine oder mehrere Bit verschobene Bitfolgen an, so daß sie ständig wechselnde Ausgangssignale abgeben.

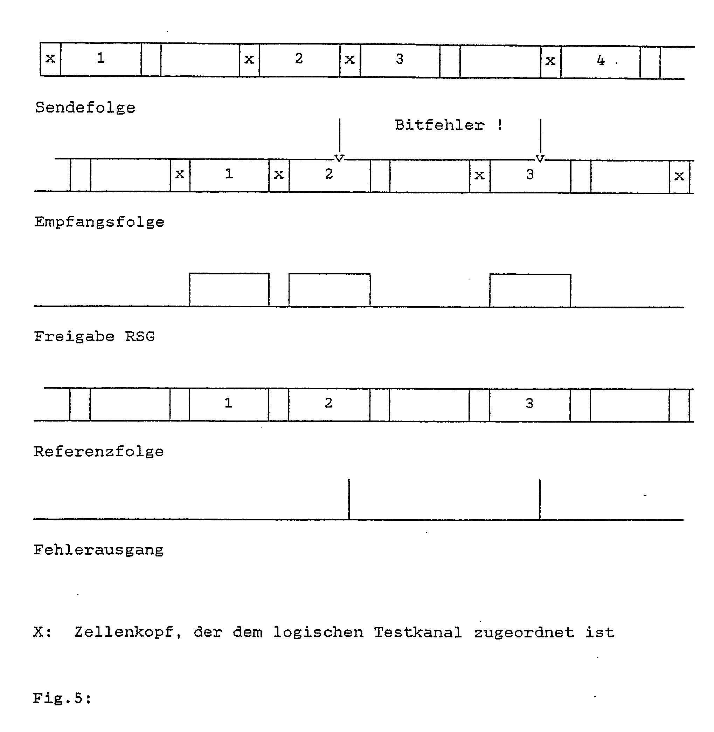

Figur 4 zeigt ein dem in Figur 2 dargestellten Diagramm entsprechendes Diagramm mit aneinandergefügten Informationsfeldern aus den Zellen des empfangenen Testsignals. Dabei ist zwischen die Informationsfelder A und B ein mit X bezeichnetes Informationsfeld einer Zelle eingefügt, die aus einem anderen logischen Übertragungskanal stammt und fälschlich in den logischen Testsignalkanal gelangt ist. Die im Referenzsignalfeld b enthaltene, mit dem Bit Nr.2 beginnende Bitfolge findet daher keine Ensprechung im Informationsfeld X, sondern erst im Informationsfeld B, das ebenfalls mit dem Bit Nr.2 beginnt und der Bitfolge im Referenzsignalfeld c um ein Bit nacheilt. Daher erscheint nur am Ausgang des Bitvergleichers 10 ein konstantes Signal, das das Einfügen einer Zelle anzeigt. An allen andernen Bitvergleichern 7 bis 9 und 11 bis 13 liegen jeweils um eine oder mehrere Zellen gegeneinander verschobene Bitfolgen an, so daß sie ständig wechselnde Ausgangssignale abgeben.

## Ansprüche

1. Verfahren zum Feststellen eines Zellverlustes und/oder einer Zelleinfügung beim Durchlaufen zellstrukturierter Signale, deren Zellen jeweils aus einem eine Vermittlungsinformation enthaltenden Kopffeld und einem die Nachricht enthaltenden Informationsfeld bestehen, durch einen beliebigen logischen Kanal einer zellorientierten Übertragungseinrichtung, dadurch gekennzeichnet, daß

a) sendeseitig ein zellstrukturiertes Testsignal erzeugt und in einem logischen Testkanal der Übertragungseinrichtung übertragen wird, dessen Zellen jeweils aus einem Kopffeld mit einer ersten Anzahl von Bits und einem Informationsfeld mit einer zweiten Anzahl von Bits bestehen, deren Längen der Norm der Übertragungseinrichtung entsprechen, wobei

b) die Kopffelder der dem logischen Testkanal zugehörigen Zellen u.a. der Kennzeichnung des logischen Testkanals auf dem Übertragungsmedium dienen, und

c) die Informationsfelder der dem logischen Testkanal zugehörigen Zellen eine periodische Testsignalfolge enthalten, deren Periode um ein Bit kleiner ist als die zweite Anzahl von Bits des Informationsfeldes,
und daß am Ausgang der Übertragungseinrichtung im Testkanal

d) die dort ankommenden Kopffelder erkannt,

e) die daran anschließenden Informationsfelder zu einer besonderen Bitfolge aneinandergereiht werden,

f) eine periodische, der sendeseitigen Testsignalfolge entsprechende Referenzsignalfolge erzeugt wird, die am Ende erkannter Zellköpfe gestartet und nach Erzeugen einer der zweiten Anzahl entsprechenden Anzahl von Bits gestoppt wird,

g) die besondere Bitfolge mit der Bitfolge des Referenzsignals bitweise verglichen wird, wobei

h) bei einem ersten Vergleich die eine Bitfolge gegenüber der anderen Bitfolge um ein Bit voreilt und bei einem zweiten Vergleich um ein Bit nacheilt und wobei

i) bei einer andauernden Übereinstimmung der beim bitweisen Vergleichen entstehenden Bitwerte auf den Verlust bzw. auf das Einfügen von Zellen geschlossen wird.

2. Verfahren nach Anspruch 1, dadurch gekennzeichnet, daß es gleichzeitig mit einem an sich bekannten Verfahren zum Unterscheiden der Bündelfehler vom Ausfall der Synchronisation zwischen Sender und Empfänger von Bitfehlermeßeinrichtungen ausgeführt wird, bei dem zwischen zwei Pseudozufallssignalfolgen, die im Sender und im Empfänger einer Bitfehlermeßeinrichtung in jeweils einem rückgekoppelten Schieberegister erzeugt werden, ein bitweiser Vergleich der über die Meßstrecke übertragenen mit der empfangsseitig erzeugten Pseudozufallsfolge vorgenommen wird, wobei die aus dem bitweisen Vergleich entstehende Fehlersignalfolge im Hinblick auf die Unterscheidung zwischen einem Synchronisationsausfall und Bündelfehlern ausgewertet wird.

3. Verfahren nach Anspruch 1 oder 2, dadurch gekennzeichnet, daß bei weiteren Vergleichen die eine Bitfolge gegenüber der anderen Bitfolge um n Bit (n = 2, 3, ..) voreilt bzw. nacheilt, wobei bei einer andauernden Übereinstimmung der beim bitweisen Vergleichen entstehenden Bitwerte auf den Verlust bzw. auf das Einfügen von n Zellen geschlossen wird.

4. Verfahren nach Anspruch 1, 2 oder 3, dadurch gekennzeichnet, daß nach Erkennen eines Synchronausfalls eine automatische Neusynchronisation gestartet wird.

5. Verfahren nach Anspruch 1, dadurch gekennzeichnet, daß die periodische Testsignalfolge ein in einem rückgekoppelten Schieberegister erzeugtes Pseudozufallssignal ist.

6. Schaltungsanordnung zur Durchführung des Verfahrens nach Anspruch 1, die sendeseitig ein zellstrukturiertes Testsignal erzeugt und in einem logischen Testkanal der Übertragungseinrichtung (2) übertägt, dessen Zellen jeweils aus einem Kopffeld mit einer ersten Anzahl von Bits und einem Informationsfeld mit einer zweiten Anzahl von Bits bestehen, deren Längen der Norm der Übertragungseinrichtung entsprechen, wobei die Kopffelder der dem logischen Testkanal zugehörigen Zellen u.a.der Kennzeichnung des logischen Testkanals auf dem Übertragungsmedium dienenund die Informationsfelder der dem logischen Testkanal zugehörigen Zellen eine periodische Testsignalfolge enthalten, deren Periode um ein Bit kleiner ist als die zweite Anzahl von Bits des Informationsfeldes, gekennzeichnet durch

a) eine Einrichtung (3) zum Unterscheiden der Kopffelder von den Informationsfeldern der im logischen Testkanal übertragenen Zellen des Testsignals und zum Abtrennen der Informationsfelder,

b) ein erstes Schieberegister (4), in das die abgetrennten Infor mationsfelder einschiebbar sind,

c) einen Referenzsignalgenerator (5), der ein periodisches Referenzsignal erzeugt, dessen Periode um ein Bit geringer ist als die zweite Anzahl von Bits des Informationsfeldes,

d) ein zweites Schieberegister (6), in das das vom Referenzsignalgenerator erzeugte Signal synchron zu den abgetrennten Informationsfeldern eingeschoben wird,

e) mindestens zwei Bitvergleicher (7, 10), die an je eine Stufe des ersten (4) und des zweiten (6) Schieberegisters angeschlossen sind, die gegeneinander um eine Stufe in einer ersten bzw. in einer zweiten Richtung versetzt sind.

7. Schaltungsanordnung nach Anspruch 6, gekennzeichnet durch eine erste Gruppe von Bitvergleichern (7 bis 9), deren erste Eingänge mit der letzten Stufe des zweiten Schieberegisters (6) und deren zweite Eingänge jeweils mit einer um ein Bit verschobenen, aufeinanderfolgenden Stufen des ersten Schieberegisters (4) verbunden sind und durch eine zweite Gruppe von Bitvergleichern (10 bis 12), deren erste Eingänge mit der letzten Stufe des ersten Schieberegisters (4) und deren zweite Eingänge jeweils mit einer um ein Bit verschobenen, aufeinanderfolgenden Stufen des zweiten Schieberegisters (6) verbunden sind.

8. Schaltungsanordnung nach Anspruch 6 oder 7, gekennzeichnet durch einen weiteren Bitvergleicher (13), der an zwei parallelen Stufen der Schieberegister (4) und (6) angeschlossen ist.

Fig.1

EP 0 393 351 A2

Fig.2: Normalfall

| | A | B | C | D | E | F | |
|---|---|---|---|---|---|---|---|
| .. | 12345671 | 23456712 | 34567123 | 45671234 | 56712345 | 67123456 | ... |

Empfangsmuster

| | a | b | c | d | e | f | |
|---|---|---|---|---|---|---|---|
| .. | 12345671 | 23456712 | 34567123 | 45671234 | 56712345 | 67123456 | ... |

Referenzmuster


Fig.3: Zellenverlust

| | A | C | D | E | F | | |
|---|---|---|---|---|---|---|---|
| .. | 12345671 | 34567123 | 45671234 | 56712345 | 67123456 | ... | |

Empfangsmuster

| | a | b | c | d | e | f | |
|---|---|---|---|---|---|---|---|
| .. | 12345671 | 23456712 | 34567123 | 45671234 | 56712345 | 67123456 | ... |

Referenzmuster


Fig.4: Zelleinfügung

| | A | X | B | C | D | E | |
|---|---|---|---|---|---|---|---|
| .. | 12345671 | xxxxxxxx | 23456712 | 34567123 | 45671234 | 56712345 | ... |

Empfangsmuster

| | a | b | c | e | f | g | |
|---|---|---|---|---|---|---|---|
| .. | 12345671 | 23456712 | 34567123 | 45671234 | 56712345 | 67123456 | ... |

Referenzmuster

EP 0 393 351 A2

| x | 1 | | | | x | 2 | x | 3 | | | | x | 4 . | | |

Sendefolge

Bitfehler !

| | | | | x | 1 | x | 2 | | | | x | 3 | | | | x |

Empfangsfolge

Freigabe RSG

| | | | | 1 | | 2 | | | | | 3 | | | | |

Referenzfolge

Fehlerausgang

X: Zellenkopf, der dem logischen Testkanal zugeordnet ist

Fig.5: